# EUROPÄISCHE PATENTANMELDUNG

(11) **EP 1 044 662 A2**
(43) Veröffentlichungstag der Anmeldung: **18.10.2000**
(21) Anmeldenummer: 00104608.5
(22) Anmeldetag: 03.03.2000
(51) Int. Cl.: A61C 17/20, A61C 3/00

(54) **Dentales Instrument zur Schall- oder Ultraschall-Behandlung**

(30) Priorität: 11.04.1999 DE 19916156
(71) Anmelder: Dürr Dental GmbH & Co. KG, 74321 Bietigheim-Bissingen (DE); Hahn, Rainer, Dr., 72074 Tübingen (DE)
(72) Erfinder: Hahn, Rainer, 72074 Tübingen (DE); Grotz, Uwe, 74369 Löchgau (DE)
(74) Vertreter: Ostertag, Reinhard

(57) **Zusammenfassung**

Ein dentales Instrument zur Schall- oder Ultraschall-Behandlung umfaßt einen Spannschaft (1), an den ein Behandlungsabschnitt (2) angesetzt ist. Spannschaft (1) und Behandlungsabschnitt (2) bestehen aus in einer Matrix gebundenen Kohlefasern. Das Instrument kann mechanisch aus einem Kohlefaser-Gewebe herausgearbeitet, ein Formpreß-Werkstück oder auch ein Spritzteil sein. Durch Variation der Länge der Kohlefasern lassen sich die mechanischen Eigenschaften des Instrumentes einstellen.

## Beschreibung

Die Erfindung betrifft ein dentales Instrument zur Schall- oder Ultraschall-Behandlung mit einem Spannschaft und einem an diesen angesetzten Behandlungsabschnitt.

In jüngster Zeit werden zunehmend die Vorteile erkannt, die mit der Schall- oder Ultraschall-Behandlung, insbe- bei Paradontalerkrankungen oder zur Zahnreinigung oder im Rahmen der Periimplantititis-Therapie, verbunden sind. Bei dieser Behandlung wird ein in Schall- oder Ultraschall-Schwingungen versetztes Behandlungsinstrument, welches von einem Fluid umspült ist, in die Zahntaschen des Patienten eingeführt. Hierzu ist im allgemeinen ein ganzes Sortiment unterschiedlich geformter und unterschiedliche Größe aufweisender Instrumente erforderlich.

Die bekannten dentalen Instrumente der eingangs genannten Art, die gegenwärtig im Einsatz sind, bestehen aus Metall. Konventionelle Metallinstrumente führen zu einer ausgeprägten Energieankopplung im Rahmen der Ultraschallbehandlung und sind steif und unflexibel. Dadurch sind sie in der Anlage an komplex gekrümmten Zahnflächen limitiert. Sie führen bei der Prophylaxebehandlung oder der Zahnreinigung zu schwärzlichem Abrieb insbesondere auf keramischem Zahnersatz. Bei der Periimplantitis-Therapie führt die Verwendung von Metallinstrumenten zu unerwünschten Politureffekten der komplex strukturierten Implantatoberflächen.

Aufgabe der vorliegenden Erfindung ist es, ein dentales Instrument der eingangs genannten Art zu schaffen, welches flexibel ist und eine verhältnismäßig weiche Oberfläche aufweist.

Diese Aufgabe wird erfindungsgemäß dadurch gelöst, daß das dentale Instrument aus in einer Matrix gebundenen Fasern besteht.

Solche Instrumente weisen nicht nur eine sehr hohe Abriebbeständigkeit auf; sie sind auch im Blick auf ihre Elastizität für den Einsatzzweck der dentalen Instrumente besonders gut geeignet. Mit ihrer verhältnismäßig weichen Oberfläche hinterlassen sie keinen Abrieb auf Zahn- oder Zahnersatzoberflächen und führen zu keinen Veränderungen an Implantatoberflächen aus Keramik oder Metall. Sie besitzen einen geringen Verschleiß und weisen daher auf lange Zeit eine optimierte Formanpassung auf. Die Flexibilität läßt sich durch Wahl des Fasermaterials und der Faserlänge gestuft einstellen.

Die Matrix, in welcher die Fasern gebunden sind, ist vorzugsweise ein Kunstharz, z.B. PEEK, Polysulfon, Acrylat bzw. ein Thermoplast.

Eine besonders hohe mechanische Stabiliät und Bruchfestigkeit, verbunden mit sehr guten Elastizitätseigenschaften, wird dann erzielt, wenn die Fasern eine Länge aufweisen, die ein Mehrfaches des Durchmessers des Instruments beträgt.

Das dentale Instrument kann ein aus einem Fasergeflecht mechanisch herausgearbeitetes Teil sein. Alternativ kann es sich bei ihm um ein Formpreß-Werkstück handeln oder auch um ein Spritzteil. Im letzteren Falle sind entweder die Fasern so kurz, daß das Gemisch aus Fasern und Matrix eine spritzfähige Masse vor dem Abbinden darstellt, oder die Fasern werden vor dem Spritzen der Matrix im Spritzgußwerkzeug positioniert.

Insbesondere bei gebogenen Instrumenten empfiehlt es sich, wenn die Fasern etwa parallel zum Instrumentenverlauf liegen.

Die erfindungsgemäßen dentalen Instrumente können zusätzlich oder alternativ zu den oben schon erwähnten Fasern kurze, verstärkende Fasern enthalten.

Ferner können die erfindungsgemäßen dentalen Instrumente zusätzlich oder alternativ zu den Fasern anorganische Partikel, z.B. Gläser, keramische Partikel, Phosphat-Partikel, Apatit-Partikel, enthalten. Diese dienen entweder zur Verstärkung oder als passive Partikel, welche unter Arbeitsbedingungen aus dem Instrument herausgelöst werden und der Oberflächenmodifikation, z.B. für verbesserte Politureffekte, dienen.

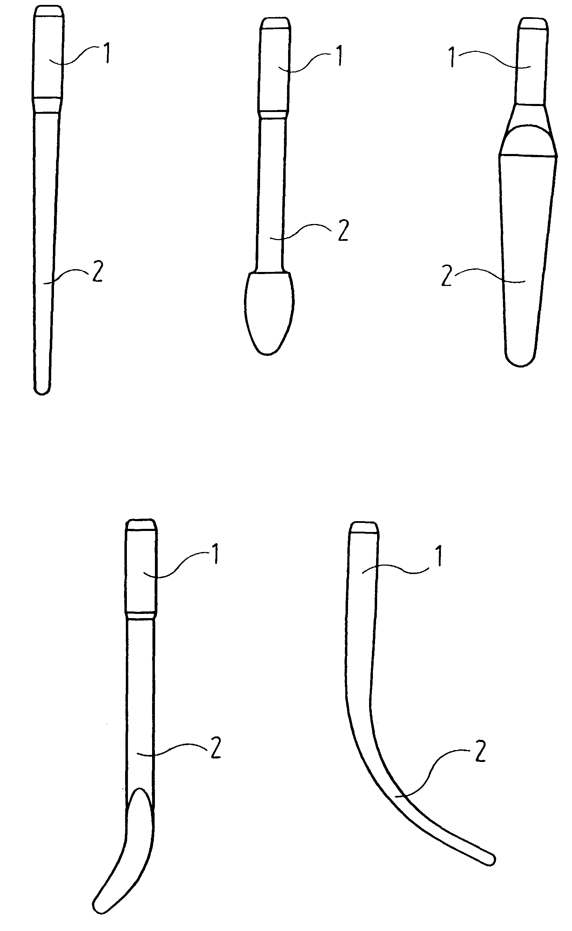

Ausführungsbeispiele der Erfindung werden nachfolgend anhand der Zeichnung näher erläutert. Die einzige Figur zeigt ein Sortiment dentaler Behandlungsinstrumente in Seitenansicht.

Alle in der Zeichnung dargestellten dentalen Instrumente weisen einen zylindrischen Spannschaft 1 auf, an den jeweils unterschiedlich geformte Behandlungsabschnitte 2 angeformt sind. In der oberen Reihe der Zeichnung sind im wesentlichen geradlinig verlaufende Behandlungsabschnitte 2, in der unteren Reihe der Zeichnung gekrümmte Behandlungsabschnitte 2 gezeigt.

Das in der linken oberen Reihe der Zeichnung gezeigte Instrument ist eine gerade Sonde für Bukal-Lingual- oder Palatinal-Flächen der Zähne oder Wurzeln und wird im Zuge der Parodontal-Behandlung oder Zahnreinigung oder der Periimplantitis-Therapie bzw. der Parodontal-Prophylaxe eingesetzt. Das in der Mitte der obern Reihe gezeigte Instrument weist am Ende des Behandlungsabschnittes 2 eine knospenförmige Erweiterung auf und wird insbesondere zur Reinigung von konkaven Zahnoberflächen verwendet. Das rechts oben gezeigte Instrument ist plättchenförmig und dient zur Reinigung bzw. Behandlung oder Prophylaxe von approximalen Zahnoberflächen im Zuge der Zahnreinigung, der Parodontal-Behandlung oder Parodontal-Prophylaxe.

Links unten in der Zeichnung ist ein kürettenförmiges Instrument gezeigt, welches bei der Behandlung der approximalen Wurzeloberflächen im Zuge der Parodontal-Behandlung oder der Parodontal-Prophylaxe eingesetzt wird. Rechts unten in der Zeichnung schließlich findet sich eine gebogene Sonde für Furkationsbereiche der Zähne bzw. Wurzeln; sie wird ebenfalls bei der Parodontal-Behandlung oder der Parodontal-Prophylaxe verwendet.

Zum Gebrauch werden die dentalen Instrumente mit ihrem Spannschaft 1 in einer Spanneinrichtung eines Schall- oder Ultraschall-Behandlungsgerätes eingespannt und von einem Schall- oder Ultraschall-Schwinger in Schwingungen versetzt. Die Hauptschwingungsrichtung ist dabei die Längsrichtung des Instrumentes. Die gekrümmten Behandlungsabschnitte 2 der in der unteren Reihe dargestellten Instrumente führen dabei zusätzlich eine wischerartige Bewegung aus, welche den gewünschten Effekt verstärkt.

Während der Benutzung werden die dentalen Instrumente mit Wasser oder einer wässrigen Lösung oder einer wässrigen Aufschlämmung beaufschlagt; letztere enthält abrasive Partikel. Es ist ohne weiteres verständlich, daß die dentalen Instrumente unter diesen Einsatzbedingungen hohen Anforderungen ausgesetzt und stark verschleißgefährdet sind.

Bei einem ersten Herstellungsverfahren für die dentalen Instrumente wird zunächst aus entsprechend langen Kohlefasern ein Gewebe hergestellt und dieses mit der Kunstharzmatrix getränkt. Aus der so hergestellten Fasermatte werden die groben Formen der Instrumente ausgesägt und sodann durch Fräsen oder Drehen in die endgültige Gestalt gebracht.

Eine alternative Herstellungsmethode besteht darin, die Kohlefasern, die sich in diesem Falle über praktisch die gesamte Länge des Instrumentes erstrecken können, in ein Pressformwerkzeug einzulegen, das Formwerkzeug mit den Kunstharz zu befüllen, zu schließen und anschließend unter Druck auszuhärten. Bei dieser Ausgestaltung verlaufen die Kohlefasern parallel zur Längsrichtung des dentalen Instrumentes, was im Blick auf die Elastizität insbesondere des Behandlungsabschnittes sehr vorteilhaft sein kann.

Kostengünstiger ist folgendes Herstellungsverfahren:

Die Kohlefasern werden auf eine solche Kürze zugeschnitten, daß sie zusammen mit dem die Matrix bildenden Kunstharz eine spritzfähige Masse bilden. Sie werden dann, ähnlich einem homogenen Kunststoff, in eine die Gestalt des Instrumentes bestimmende Spritzform eingespritzt.

## Patentansprüche

1. Dentales Instrument zur Schall- oder Ultraschall-Behandlung mit einem Spannschaft und einem an diesen angesetzten Behandlungsabschnitt,
dadurch gekennzeichnet,
daß es aus in einer Matrix gebundenen Fasern besteht.

2. Dentales Instrument nach Anspruch 1, dadurch gekennzeichnet, daß die Fasern Glasfasern, bevorzugt silanisierte Glasfasern, Kohlefasern, metallische oder organische Fasern sind.

3. Dentales Instrument nach Anspruch 1 oder 2, dadurch gekennzeichnet, daß die Matrix ein Kunstharz, z.B. PEEK, Polysulfon, Acrylat bzw. ein Thermoplast, ist.

4. Dentales Instrument nach einem der vorhergehenden Ansprüche, dadurch gekennzeichnet, daß die Fasern eine Länge aufweisen, die ein Mehrfaches des Durchmessers des Instrumentes beträgt.

5. Dentales Instrument nach einem der vorhergehenden Ansprüche, dadurch gekennzeichnet, daß es aus einem Fasergeflecht mechanisch herausgearbeitet ist.

6. Dentales Instrument nach einem der Ansprüche 1 bis 4, dadurch gekennzeichnet, daß es ein Formpreß-Werkstück ist.

7. Dentales Instrument nach einem der Ansprüche 1 bis 4, dadurch gekennzeichnet, daß es ein Spritzteil ist.

8. Dentales Instrument nach einem der vorhergehenden Ansprüche, dadurch gekennzeichnet, daß die Faserrichtung parallel zum Instrumentenverlauf ist.

9. Dentales Instrument nach einem der vorhergehenden Ansprüche, dadurch gekennzeichnet, daß es verstärkende kurze Fasern enthält.

10. Dentales Instrument nach einem der vorhergehenden Ansprüche, dadurch gekennzeichnet, daß es anorganische Partikel, insbesondere Gläser, keramische Partikel, Phosphat-Partikel, Apatit-Partikel, enthält.
